# EUROPEAN PATENT SPECIFICATION

(11) **EP 3 778 361 B1**
(45) Date of publication and mention of the grant of the patent: **04.09.2024**
(21) Application number: 19774724.9
(22) Date of filing: 19.02.2019
(51) Int. Cl.: B62J 9/12, B62J 45/00

(54) **USB TERMINAL UNIT DISPOSITION STRUCTURE OF SADDLE RIDE TYPE VEHICLE**
ANNORDNUNGSSTRUKTUR EINER USB-ANSCHLUSSEINHEIT FÜR EIN SATTELFAHRZEUG
STRUCTURE DE DISPOSITION D'UNITÉ DE TERMINAL USB POUR VÉHICULE DE TYPE À SELLE

(30) Priority: 29.03.2018 JP 2018064807
(43) Date of publication of application: 17.02.2021
(73) Proprietor: HONDA MOTOR CO., LTD., Minato-ku Tokyo 107-8556 (JP)
(72) Inventor: SENOKUCHI Yuta, Wako-shi, Saitama 351-0193 (JP); KITAMURA Ryohei, Wako-shi, Saitama 351-0193 (JP); YAMADA Tsuyoshi, Wako-shi, Saitama 351-0193 (JP)
(74) Representative: Kiwit, Benedikt
(86) International application number: PCT/JP2019/006114
(87) International publication number: WO 2019/187798

(56) References cited:
- EP-A1- 2 979 963
- CN-U- 205 396 412
- JP-A- 2013 060 082
- JP-A- 2014 043 208
- JP-A- 2014 043 208
- JP-A- 2018 020 619
- KR-B1- 101 611 203
- KR-B1- 101 611 203
- TW-A- 201 325 976
- TW-A- 201 627 184
- TW-B- I 589 466
- US-A1- 2011 230 087
- US-A1- 2015 014 380
- US-A1- 2015 325 946
- US-A1- 2018 069 413
- US-B2- 8 323 050

## Description

### TECHNICAL FIELD

The present invention relates to a USB terminal unit disposition structure for a saddle-ride type vehicle.

### BACKGROUND ART

In a saddle-ride type vehicle of the related art, an inner box capable of storing an article is provided on a rear side (the inside) of a leg shield disposed in front of a driver's leg, and an accessory socket for power supply (a so-called cigarette lighter socket) is provided inside the inner box (refer to JP 5 965 055 B2, for example). The accessory socket has a cylindrical shape, and a plug corresponding thereto can be inserted and detached in an axial direction. An axial direction (an insertion-detachment direction) of the socket is inclined upward, and the socket is disposed such that an axis thereof passes through an opening of the inner box. Accordingly, it is easy to insert and detach the plug into and from the socket through the opening.

US 2011 / 0 230 087 A1 shows a USB terminal unit structure according to the preamble of claim 1.

### SUMMARY

### PROBLEMS TO BE SOLVED BY THE INVENTION

Meanwhile, in a case in which a mobile device such as a smartphone is connected to the above-described accessory socket with a USB connector, an adapter corresponding to a USB plug on the device side is attached to the accessory socket, and thus attachment of the device is complicated. Further, it is desirable for the accessory socket to be able to be used for various types of communication in addition to power supply. Therefore, it is desirable for a USB port (a socket) to be installed on the vehicle side. However, particularly in the saddle-ride type vehicle, attachment and detachment of the USB plug are performed with a gloved hand or in a dark place, and thus there is a need for a structure in which the ease of inserting the USB plug is fully considered.

Therefore, the present invention provides a USB terminal unit disposition structure of a saddle-ride type vehicle, which can make insertion of a connection terminal of an external device easier.

### MEANS FOR SOLVING THE PROBLEM

As a means for solving the above-described problems, a first aspect of the present invention is directed to a USB terminal unit disposition structure of a saddle-ride type vehicle which includes a USB terminal unit (52) which has at least one of a power supply function and a communication function and into and from which a connection terminal (51) of an external device is inserted and detached; and a vehicle body side attachment component (26) to which the USB terminal unit (52) is attached, wherein the vehicle body side attachment part (26) is disposed on a back side of a shielding portion (27b) to shield the USB terminal unit (52), wherein the shielding portion (27b) includes a vehicle body side opening (31) that exposes a terminal connection port (53) of the USB terminal unit (52) on a front side of the shielding portion (27b), and a recess (32) obtained by recessing a periphery of the vehicle body side opening (31) from the front side of the shielding portion (27b), wherein the USB terminal unit (52) inserts and detaches the connection terminal (51) in a predetermined insertion-detachment direction (W1), wherein the recess (32) includes a tapered portion (32a) formed to be widened toward a detachment side in the insertion-detachment direction (W1), the USB terminal unit disposition structure further comprising an article storage box (26) that allows an article to be put in and taken out through a box opening (27a), wherein the terminal connection port (53) is disposed in the shielding portion (27b) opposite to the box opening (27a) in the article storage box (26), wherein an upward portion (32c) formed upward in the tapered portion (32a) is provided with a display portion (33) showing a presence of the USB terminal unit (52), and wherein the USB terminal unit (52) is disposed such that the terminal connection port (53) faces downward.

According to this configuration, the recess provided at a periphery of the vehicle body side opening (the terminal connection port) makes it possible to visually and tactually recognize the presence and position of the terminal connection port, and thus it is possible to make insertion of the connection terminal easier. When the connection terminal is inserted, if the connection terminal is brought close to the terminal connection opening, the tapered portion guides the connection terminal toward the terminal connection port, and thus it is possible to make insertion of the connection terminal easier. When the user looks down on the shielding portion, the presence and position of the USB terminal unit can be seen due to the display portion provided on the upward portion, and thus it is possible to make insertion of the connection terminal easier.

Further according to this configuration, it is possible to easily secure capacity on the inner side of the article storage box (the box opening side), and to enhance usability of the article storage box.

Further according to this configuration, as compared with the case in which the terminal connection port is disposed to face upward, it is difficult for water or dust to enter the terminal connection port even when it is exposed to water, and a waterproof property and a dustproof property of the USB terminal unit can be enhanced. In addition, when the connection terminal is gripped from below and attached to and detached from the USB terminal unit, it is possible to make attachment and detachment of the connection terminal easier.

According to a second aspect of the present invention, the above-described second aspect further includes an article storage box (26) that allows an article to be put in and taken out, wherein the USB terminal unit (52) is disposed such that the terminal connection port (53) faces an inside of the article storage box (26), and wherein the terminal connection port (53) is disposed above a central portion (26a) of the article storage box (26) in a vertical direction.

According to this configuration, when the connection terminal is gripped from below and inserted into the USB terminal unit, it is easy for the hand to enter below the terminal connection port in the article storage box, and it is possible to make insertion of the connection terminal easier.

According to a third aspect of the present invention, any one of the above-described first to third aspects further includes an article storage box (26) that allows an article to be put in and taken out, wherein the USB terminal unit (52) is disposed such that the terminal connection port (53) faces an inside of the article storage box (26), and wherein a cord holder (34) capable of holding a connection cord (51a) extending from the terminal connection port (53) is provided inside the article storage box (26).

According to this configuration, it is possible to gather the connection cord connected to the USB terminal unit or to store the connection cord to be connected, and therefore it is possible to prevent the connection cord from being entangled in the article storage box or hindering storage of other articles, and to enhance usability of the article storage box and the USB terminal unit.

According to a fourth aspect of the present invention, any one of the above-described first to fifth aspects further includes a display portion (33) showing a presence of the USB terminal unit (52), wherein the display portion (33) changes a display according to insertion-detachment of the connection terminal (51) with respect to the USB terminal unit (52).

According to this configuration, insertion status of the connection terminal can be seen by the change of the display such as the sign, the color, or the like, and convenience of the USB terminal unit can be improved.

According to a fifth aspect of the present invention, any one of the above-described first to sixth aspects further includes a light emitting portion (33a) that illuminates the terminal connection port (53).

According to this configuration, the presence and position of the USB terminal unit can be reliably recognized by visual observation, and thus insertion of the connection terminal can be made easier.

### ADVANTAGE OF THE INVENTION

According to the present invention, it is possible to provide a USB terminal unit disposition structure of a saddle-ride type vehicle, which can make insertion of a connection terminal of an external device easier.

### BRIEF DESCRIPTION OF THE DRAWINGS

Fig. 1 is a left side view of a motorcycle according to an embodiment of the present invention.
Fig. 2 is a rear view of a handlebar cover and the vicinity of a leg shield of the above-described motorcycle.
Fig. 3 is a perspective view of the vicinity of a left inner box of the above-described motorcycle.
Fig. 4 is a cross-sectional view along line IV-IV of Fig. 2.
Fig. 5 is a cross-sectional view along line V-V of Fig. 2.
Fig. 6 is a perspective view of a USB port.
Fig. 7 is a side view of the USB port including a cross section of a wall portion to which the USB port is attached.
Fig. 8 is a perspective view of the vicinity of a port opening from above on a front side of the above-described wall portion.
Fig. 9 is a perspective view of a state in which the USB port is attached from a back side of the above-described wall portion.

### DESCRIPTION OF THE EMBODIMENTS

Hereinafter, embodiments of the present invention will be described with reference to the drawings. Note that front, rear, left, and right directions in the following description are the same as directions in a vehicle described below unless otherwise specified. Further, an arrow FR indicating a forward direction with respect to the vehicle, an arrow LH indicating a leftward direction with respect to the vehicle, an arrow UP indicating an upward direction with respect to the vehicle, and a line CL indicating a lateral center of a vehicle body are shown at appropriate places in the drawings used in the following description.

### <Whole vehicle>

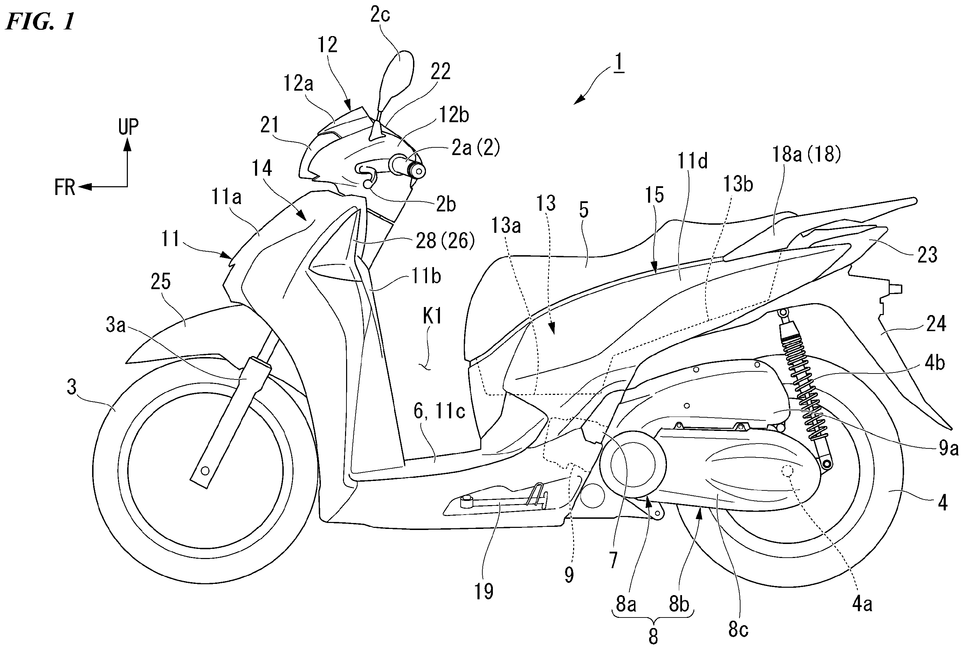

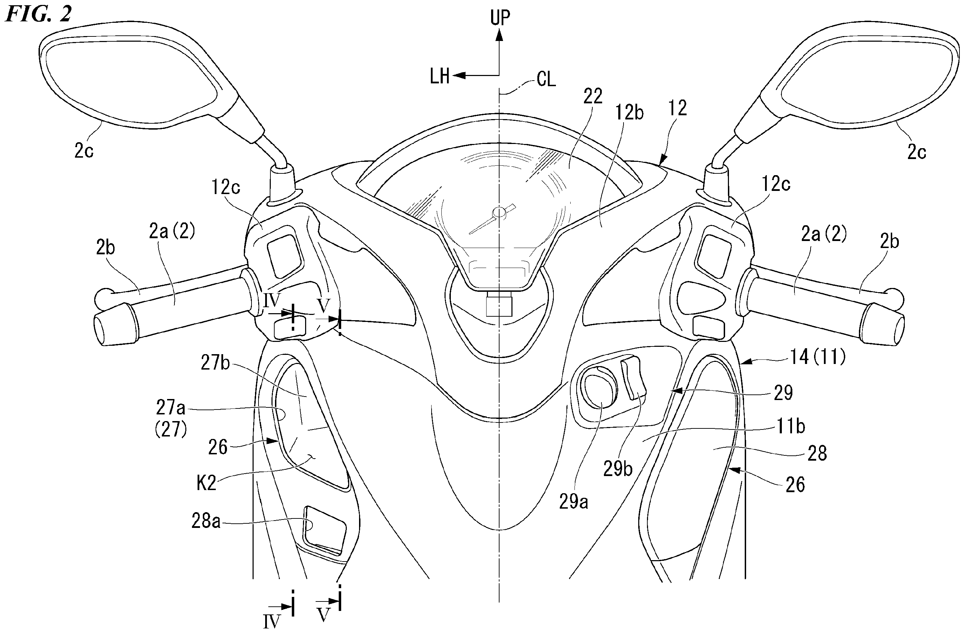

Fig. 1 shows a scooter type motorcycle 1 as an example of a saddle-ride type vehicle. The motorcycle 1 includes a front wheel 3 that is a steering wheel and a rear wheel 4 that is a driving wheel. The front wheel 3 is supported by a front fork 3a and can be steered by a bar handle 2. An accelerator grip is attached to a right grip 2a among left and right grips 2a (see Fig. 2) of the bar handle 2. The rear wheel 4 is supported by a swing type power unit 8 and can be driven by the power unit 8. In the drawing, reference sign 4a denotes a rear wheel axle, and reference sign 4b denotes a rear cushion.

Components of a steering system including the bar handle 2, the front fork 3a, and the front wheels 3 are supported by a front end portion of a vehicle body frame (not shown) to be steerable. A front portion of the power unit 8 is supported by a lower portion of the vehicle body frame to be vertically swingable.

A step floor 6 on which a driver puts his/her feet is provided between the front wheels 3 and the rear wheels 4. A leg shield 14 is provided in front of the step floor 6. A rear body 15 is provided behind the step floor 6.

A seat 5 on which an occupant sits is supported on the rear body 15. A space K1 between the bar handle 2 and the seat 5 (a space above the step floor 6) is a straddling space K1 that is used when the driver straddles the vehicle body. Foldable pillion steps 7 on which a rear passenger sitting on a rear portion of the seat 5 puts his/her feet are provided on both lower sides of the rear body 15. A foldable side stand 19 that can support the vehicle body in a standing state in which the vehicle body is inclined to a left side is provided on a lower left side of the step floor 6.

The power unit 8 includes an engine 8a that is an internal combustion engine, and a transmission device (for example, a belt-type continuously variable transmission) 8b that transmits a driving force generated by the engine 8a to the rear wheels 4.

The engine 8a has a crankshaft extending in a vehicle width direction (a left-right direction), and a cylinder 9 protrudes substantially horizontally forward (specifically, to be slightly inclined forward and upward) from a front end of a crankcase (not shown). An intake pipe (not shown) is connected to an upper portion (an intake side) of the cylinder 9. An exhaust pipe (not shown) is connected to a lower portion (an exhaust side) of the cylinder 9.

The transmission device 8b includes a transmission case 8c extending rearward from one side (the left side) of the crankcase in the vehicle width direction. An air cleaner case 9a to which an upstream side of the intake pipe is connected is supported above the transmission case 8c.

A periphery of the vehicle body frame of the motorcycle 1 is covered with a vehicle body cover 11. The vehicle body cover 11 includes a front cover 11a that covers a front portion of the vehicle body frame from a front side, an inner cover 1 1b that covers the front portion of the vehicle body frame from a rear side, a floor cover 11c that covers the lower portion of the vehicle body frame from above, and a rear body cover 11d that covers a rear portion of the vehicle body frame from the front side and a lateral side. The front cover 11a and the inner cover 11b constitute a leg shield 14 that covers the front of the legs of the driver. The rear body cover 11d forms an outer surface of the rear body 15.

Referring also to Fig. 2, a periphery of the bar handle 2 is covered with a handle cover 12.

The handle cover 12 includes a front handle cover 12a that covers the bar handle 2 from the front side, and a rear handle cover 12b that covers the bar handle 2 from the rear side. The handle cover 12 can pivot together with the bar handle 2 with respect to the vehicle body frame and the vehicle body cover 11. A head lamp 21 is disposed at a central portion of the front handle cover 12a in the vehicle width direction. A meter unit 22 is disposed at a central portion of the rear handle cover 12b in the vehicle width direction.

A pair of left and right switch boxes 12c that can be operated by driver's hands holding the left and right grips 2a of the bar handle 2 are provided on both sides of the rear handle cover 12b in the vehicle width direction.

The left and right switch boxes 12c are provided integrally with the handle cover 12, for example. Note that the left and right switch boxes 12c may be provided as a separate body from the handle cover 12. A pair of left and right operation levers (for example, front and rear brake levers) 2b that can be operated by the hands of the driver which hold the left and right grips 2a are disposed in front of the left and right grips 2a. Reference sign 2c in the drawing denotes a pair of left and right rearview mirrors that penetrate through both sides of the handle cover 12 in the vehicle width direction and are supported by the bar handle 2.

A container-shaped luggage box 13 that opens upward is disposed inside the rear body cover 11d. An upper opening of the luggage box 13 can be opened and closed by the seat 5 pivoting around a front end. The luggage box 13 is long in a front-rear direction like the seat 5 having front and rear seating surfaces. A relatively deep front storage compartment 13a is formed at the front of the luggage box 13 and can store a helmet. A relatively shallow rear storage compartment 13b is formed at the rear of the luggage box 13. A rear carrier 18 including left and right rear grips 18a that can be gripped by a rear passenger is disposed behind the seat 5 in an upper rear portion of the rear body 15.

In Fig. 1, reference sign 23 denotes a rear combination lamp disposed at a rear end of the rear body 15, reference sign 24 denotes a rear fender extending rearward and downward from the rear combination lamp 23, and reference sign 25 denotes a front fender pivoting together with the steering system.

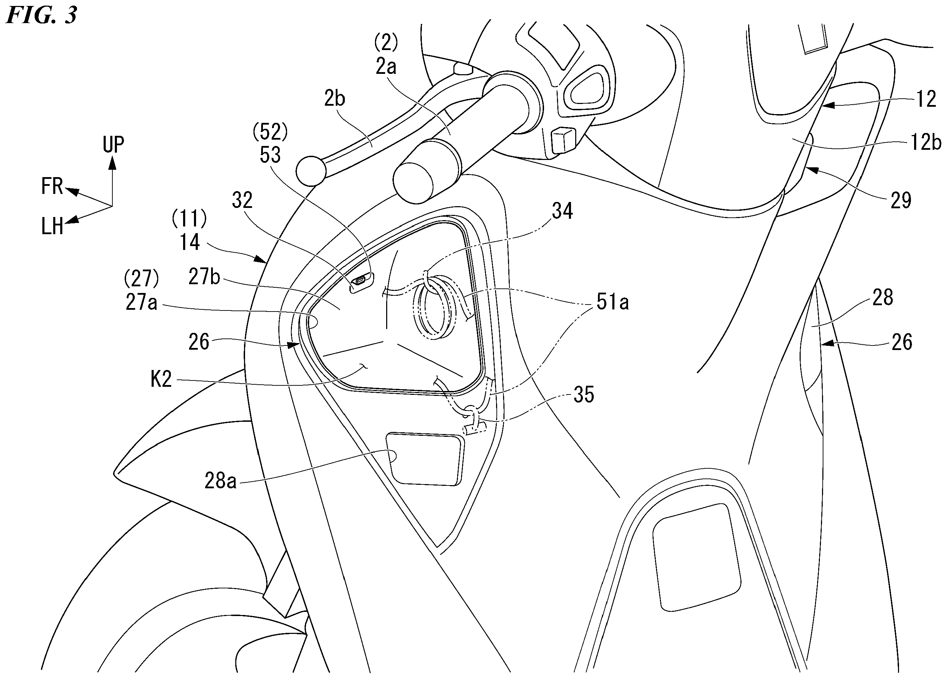

Referring to Figs. 2 and 3, a pair of inner boxes 26 that can store a small article as compared with the luggage box 13 are provided on both sides inside the leg shield 14 (on the vehicle front side) in the vehicle width direction. The inner box 26 includes a box main body 27 that allows articles to be put in and taken out through a box opening 27a that opens to the rear side of the vehicle, and a lid 28 that opens and closes the box opening 27a of the box main body 27. For convenience of illustration, the inner box 26 on the left side of the drawing does not show the lid 28. Reference sign 28a in the drawing denotes an insertion hole for a hinge arm of the lid 28.

In the inside (the rear side) of the leg shield 14, on one side in the vehicle width direction (a right side, the same side as the accelerator grip) and on the inside of the inner box 26 on the same side in the vehicle width direction, a main switch 29 including an ignition switch 29a and a lock release switch 29b for the seat 5 and the like is provided. Note that the inner box 26 may be provided only on one side opposite to the main switch 29 (a left side, the same side as the side stand 19) in the vehicle width direction.

### <USB port>

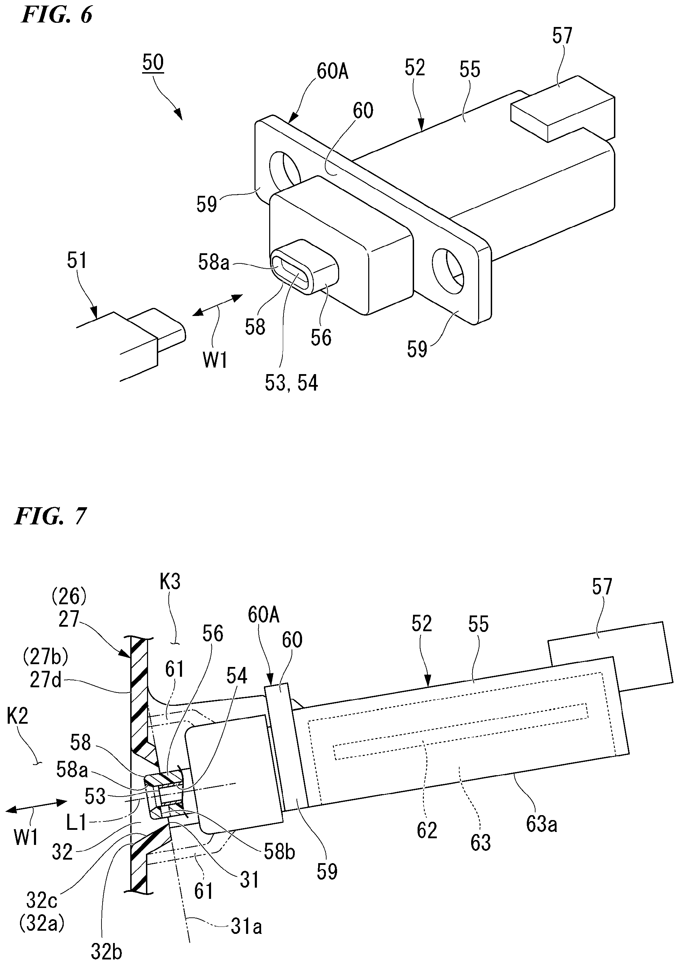

Referring to Fig. 6, the motorcycle 1 can be connected to an external device such as a smartphone by a Universal Serial Bus (USB) connector 50. The USB connector 50 is constituted by a USB plug (a connection terminal) 51 on the external device side and a USB port (a USB terminal unit) 52 as a socket on the vehicle side. For example, the USB port 52 of the present embodiment has a power supply function and a communication function.

As shown in Fig. 3, the USB port 52 has a port opening 53 disposed inside the inner box 26 on the left side of the leg shield 14, for example. Accordingly, it is possible to connect the external device to the USB port 52 while accommodating the external device in the inner box 26, or to connect the external device to the USB port 52 while mounting the external device around the bar handle 2.

As the USB connector 50, a connector that conforms to an existing standard is adopted, and it is particularly preferable to use the later-developed "USB Type-C". This is because if the USB port 52 is "USB Type-C", it has a waterproof property suitable for a saddle-ride type vehicle and also improves a power supply capability and a communication capability. Note that the USB connector may be provided with a cap that is attachable to and detachable from the USB port 52. The external device is not limited to the smartphone, and may be a tablet, a navigation terminal, an audio device, an illumination device, a charger, an external memory, or the like, for example.

Referring to Figs. 6 and 7, the USB port 52 includes a mouthpiece portion 54 serving as a mechanical joint for inserting and detaching the USB plug 51 in a predetermined insertion-detachment direction (indicated by an arrow W1 in the drawings), and a casing 55 that supports the mouthpiece portion 54 and is fixed to the vehicle body side (the inner box 26).

The mouthpiece portion 54 has a flat hollow cross-sectional shape, for example, and extends in the insertion-detachment direction W1.

A port opening 53 through which the USB plug 51 is inserted and detached is formed at an end portion of the mouthpiece portion 54 on one end side (the side from which the USB plug 51 is detached, hereinafter, referred to as a detachment side) in the insertion-detachment direction W1. A plurality of terminals (not shown) are arranged inside the mouthpiece portion 54 facing the port opening 53.

The casing 55 is formed of an insulating resin, for example, and has a rectangular parallelepiped outer shape, for example, that is long in the insertion-detachment direction W1. A mouthpiece holding portion 56 that protrudes toward the detachment side in the insertion-detachment direction W1 is formed at an end portion of the casing 55 on the detachment side in the insertion-detachment direction W1. A coupler 57 capable of connecting a vehicle body side harness arranged on the vehicle body side thereto is provided on the other end side (the side into which the USB plug 51 is inserted, hereinafter referred to as an insertion side) of the casing 55 in the insertion-detachment direction W1. The mouthpiece portion 54 may be omitted from the USB port 52. That is, the mouthpiece portion 54 constitutes a mechanical joint for inserting and detaching the USB plug 51 in the insertion-detachment direction W1. A resin joint may be formed at a portion of the casing 55 corresponding to the mouthpiece holding portion 56 with this mouthpiece portion 54 omitted.

The mouthpiece holding portion 56 is provided to cover an outer periphery of the mouthpiece portion 54. A tip end portion of the mouthpiece holding portion 56 is provided with a protrusion 58 that protrudes toward the detachment side from a tip end portion (the port opening 53) of the mouthpiece portion 54. The protrusion 58 is provided in an annular shape to surround an outer periphery of the port opening 53 over the entire periphery. The protrusion 58 is provided so that an inner peripheral edge thereof overlaps with a peripheral edge of the port opening 53 (in other words, adjacent to the peripheral edge of the port opening 53) when viewed in the insertion-detachment direction W1.

A guide portion 58a is provided on a front end side and an inner peripheral side of the protrusion 58, and is inclined to widen a vehicle body side opening 31 toward the detachment side in the insertion-detachment direction W1. The guide portion 58a functions as a guide portion that guides the USB plug 51 approaching from the detachment side in the insertion-detachment direction W1 to the port opening 53. A drain hole 58b (see Fig. 7) that guides water which has entered the protrusion 58 to a lower side of the protrusion 58 is provided on a downward side of a base portion (an end portion on the insertion side in the insertion-detachment direction W 1) of the protrusion 58 in an on-vehicle state. Note that a drain portion of the water in the protrusion 58 is not limited to the drain hole 58b, and may be a drain groove, a cutout, or the like, for example.

Referring to Figs. 3, 5, and 7, the USB port 52 is attached to, for example, a back wall 27b located on a side (the front side in a vehicle front-rear direction) opposite to the box opening 27a in the inner box 26. In the USB port 52, the port opening 53 and the protrusion 58 are exposed inside the inner box 26 from the vehicle body side opening 31 formed in the back wall 27b. In the USB port 52, the port opening 53 and the protrusion 58 face an inner space K2 of the inner box 26. The remaining portions of the USB port 52 except for the port opening 53 and the protrusion 58 face a space (an inner space of the leg shield 14) K3 in front of the back wall 27b. That is, the USB port 52 is shielded with the back wall 27b except for the port opening 53 and the protrusion 58 when an inside of the inner box 26 is viewed in the completed motorcycle 1.

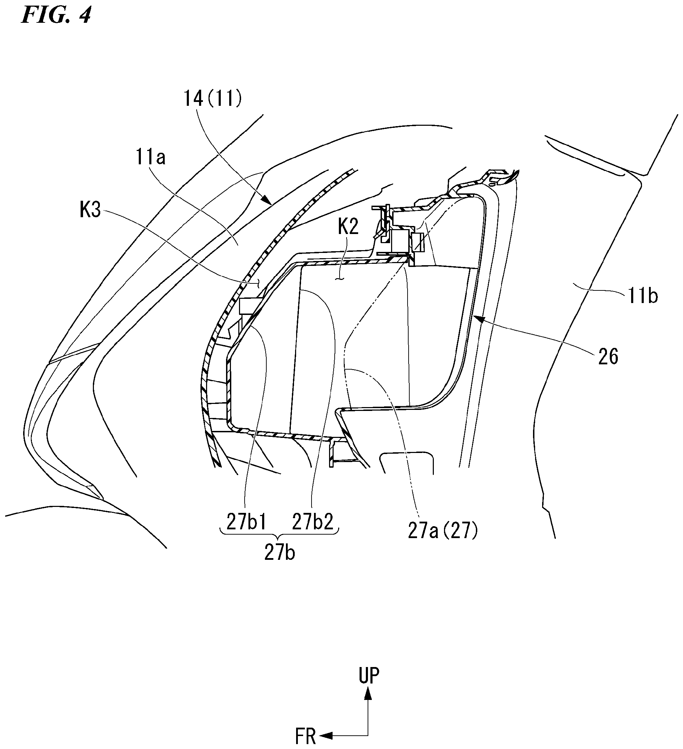

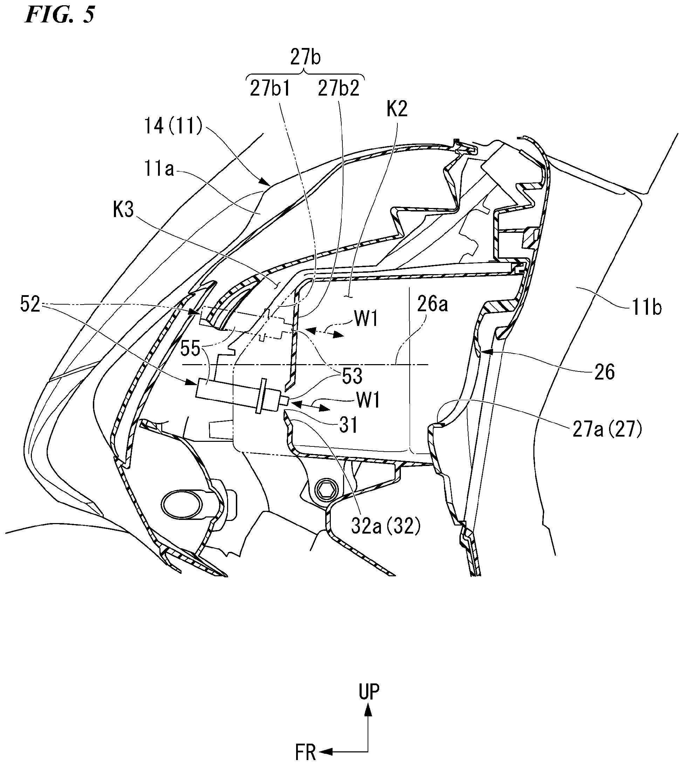

Referring to Figs. 4 and 5, the back wall 27b of the inner box 26 includes, for example, a first back wall 27b1 having a depth in an outer side of the inner box 26 in the vehicle width direction and a second back wall 27b2 displaced toward the box opening 27a side in an inside of the inner box 26 in the vehicle width direction. The USB port 52 is attached to the second back wall 27b2. The inner box 26 has a depth of the inner space K2 by the first back wall 27b1 and attaches the USB port 52 to the second back wall 27b2 to bring the port opening 53 close to the box opening 27a.

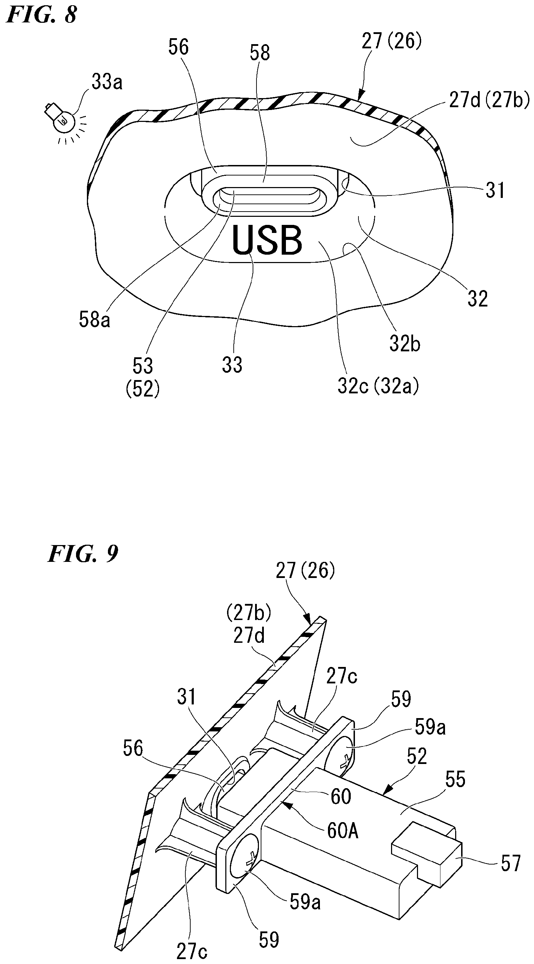

Referring to Figs. 6 and 9, a pair of attachment flanges 59 are provided on both sides in a width direction (the left-right direction in an on-vehicle state) intersecting with the insertion-detachment direction W1 on the detachment side of the casing 55 in the insertion-detachment direction W1. A pair of fastening bosses 27c are provided on both left and right sides of the vehicle body side opening 31 on a front surface side of the back wall 27b (a side facing the inside of the leg shield 14). The pair of attachment flanges 59 are fastened and fixed to the pair of fastening bosses 27c by screws 59a screwed from the front of the fastening bosses. Accordingly, the USB port 52 is fixedly attached to the front surface side of the back wall 27b (the inner space K3 side of the leg shield 14).

An upper flange 60 that extends between upper portions of the pair of attachment flanges 59 is provided on an upper surface of the casing 55 in an on-vehicle state. The upper flange 60 is connected to the pair of attachment flanges 59 to be flush with each other and connects the attachment flanges to each other, thereby enhancing attachment strength and rigidity of the USB port 52. The upper flange 60 and the pair of attachment flanges 59 also function as a water blocking portion 60A that blocks water moving along the casing 55 from flowing to the port opening 53 side. Note that the water blocking portion 60Athat blocks the water moving along the casing 55 is not limited to a water blocking wall, and may have a structure for guiding water such as a groove or an inclined shape.

Referring to Figs. 5 and 7, the USB port 52 is disposed so that the port opening 53 faces downward in an on-vehicle state. A central axis L1 (see Fig. 7) of the port opening 53 (and the mouthpiece portion 54) in the insertion-detachment direction W1 is disposed to have an inclination angle with respect to a horizontal plane so that the central axis is located on a downward side toward the detachment side in the insertion-detachment direction W1. That is, the insertion-detachment direction W1 of the USB port 52 is inclined to be located on a downward side toward the detachment side with respect to a horizontal direction. The insertion-detachment direction W1 is also a normal direction of an end surface of the mouthpiece portion 54, which forms the port opening 53. Further, since the port opening 53 is inclined downward, it is difficult for water or dust to enter and accumulate in the vicinity of the port opening 53 in the protrusion 58.

The entire USB port 52 including the casing 55 is disposed to be inclined rearward and downward. In the leg shield 14, water flung up by the front wheel 3 or water that has entered from above the leg shield 14 may splash on the components inside the leg shield 14. When this water splashs on the USB port 52, the water moving along the surface of the casing 55 may reach the vicinity of the port opening 53 through the vehicle body side opening 31. In the USB port 52 of the present embodiment, the upper flange 60 and the pair of attachment flanges 59 are provided on an upper surface and left and right side surfaces of a downward side (the detachment side in the insertion-detachment direction W 1) of the casing 55 in an on-vehicle state. Since the upper flange 60 and the pair of attachment flanges 59 function as a water blocking wall, it is difficult for the water moving along the casing 55 to reach the vicinity of the port opening 53.

In an on-vehicle state, the USB port 52 shown by the solid line in Fig. 5 is disposed so that the port opening 53 is located below a central portion (shown by line 26a in Fig. 5) of the inner box 26 in a vertical direction. In this case, when the user looks down on the inner box 26, it is easy to see the port opening 53.

Meanwhile, in an on-vehicle state, the USB port 52 shown by a chain line in Fig. 5 is disposed so that the port opening 53 is located above the central portion (shown by line 26a in Fig. 5) of the inner box 26 in the vertical direction. In a case in which the port opening 53 is disposed to face downward, when the USB plug 51 is inserted into and detached from the port opening 53, the user performs an operation while gripping the USB plug 51 from below. Therefore, the port opening 53 is located above the central portion 26a of the inner box 26 in the vertical direction, so that a space for the user's hand to enter below the port opening 53 is secured, and an attachment and detachment operation of the USB plug 51 is easily performed.

Referring to Fig. 7, the casing 55 is provided with a hood 61 protruding to the detachment side in the insertion-detachment direction W1 at a portion spaced from an outer peripheral side of the mouthpiece holding portion 56. A front end portion of the hood 61 is close to or in contact with a back surface of the back wall 27b. Accordingly, even if the water inside the leg shield 14 approaches the USB port 52 along the back surface of the back wall 27b, the hood 61 prevents the mouthpiece holding portion 56 from being exposed to water and the water does not easily reach the vicinity of the port opening 53. If the hood 61 is configured to be in close contact with the back wall 27b via an elastic seal or the like, a waterproof property in the vicinity of the port opening 53 is further enhanced. The hood 61 is provided to surround an outer periphery of the protrusion 58 over the entire periphery, but it may be provided at least above the protrusion 58 in an eave shape.

The USB port 52 includes a circuit board 62, which is connected to a terminal in the mouthpiece portion 54, inside the casing 55. The circuit board 62 includes, for example, a DC-DC converter, is disposed along upper and lower surfaces of the casing 55 in an on-vehicle state, and is accommodated in the casing 55. The casing 55 opens a lower surface side in an on-vehicle state to form a case opening portion. In the USB port 52, the circuit board 62 is sealed in a watertight manner by injecting potting resin 63 from the case opening portion to fill the casing 55 with the potting resin in a state in which the circuit board 62 is accommodated in the casing 55. The USB port 52 has the lower surface of the casing 55 in an on-vehicle state as a potting surface 63a where the potting resin 63 is exposed. That is, the USB port 52 is disposed so that the potting surface 63a faces downward in an on-vehicle state. The potting surface 63a is inclined to be located on a downward side toward the port opening 53 with respect to the horizontal direction. This disposition prevents water or dust from accumulating on a potting surface 63a and enhances a waterproof property and a dustproof property.

Referring to Figs. 5, 7, and 8, most of the USB port 52 is disposed in front of the back wall 27b (on a back side of the back wall 27b, outside the inner box 26). The USB port 52 is shielded with the back wall 27b except for the port opening 53 and the protrusion 58. The back wall 27b has a recess 32 obtained by recessing a periphery of the vehicle body side opening 31 when viewed from a rear side of the back wall 27b (the front side of the back wall 27b, inside the inner box 26). The recess 32 is recessed with respect to a flat general surface 27d of the back wall 27b except for a periphery of the vehicle body side opening 31 when viewed from the rear side of the back wall 27b. In the recess 32, the protrusion 58 of the casing 55, which protrudes rearward from the vehicle body side opening 31, faces the rear side. The protrusion 58, and consequently the USB port 52 does not protrude rearward from the general surface 27d of the back wall 27b, and suppresses an influence on an article storage space of the inner box 26.

The mouthpiece portion 54 inside the protrusion 58 is located on the rear side in the insertion-detachment direction W1 with respect to a tip end of the protrusion 58. Accordingly, even if the USB plug 51 is inserted to abut against the USB port 52, the abutting load is not directly transmitted to the mouthpiece portion 54. The casing 55 is fixed to the back wall 27b on the vehicle body side. Accordingly, when the abutting load is input to the protrusion 58, the abutting load is supported on the back wall 27b, that is, the vehicle body side. Therefore, the load input to the mouthpiece portion 54 of the USB port 52 is suppressed, and a protection property in the vicinity of the terminals is enhanced.

The recess 32 has a tapered portion 32a extending in the insertion-detachment direction W1. The tapered portion 32a extends to be widened from a peripheral edge of the vehicle body side opening 31 toward the general surface 27d of the back wall 27b. The tapered portion 32a extends to be inclined for widening the vehicle body side opening 31. Accordingly, the tapered portion 32a functions as a guide portion that guides the USB plug 51 approaching from the detachment side in the insertion-detachment direction W1 to the vehicle body side opening 31, and consequently the port opening 53. The recess 32 makes an opening 32b formed on the general surface 27d of the back wall 27b larger than the vehicle body side opening 31 by the tapered portion 32a that is widened toward the general surface 27d of the back wall 27b. As a result, a user can easily visually and tactually recognize the presence and position of the USB port 52, and usability of the USB port 52 is improved.

Referring to Figs. 7 and 8, the recess 32 is provided with a display portion 33 for notifying a user of the presence and position of the port opening 53. The display portion 33 is provided on an upper surface of a lower wall 32c of the tapered portion 32a, which is inclined upward. A normal direction of the upper surface of the lower wall 32c is inclined to be located on an upward side as a distance from the lower wall 32c increases with respect to the horizontal direction. The display portion 33 displays text or a mark indicating the presence of the USB port 52 by marking or painting, for example. Since the display portion 33 is formed on an upward surface of the tapered portion 32a, it is easy for a user to see when looking down. Since the USB port 52 is disposed to be inclined downward, an imaginary surface 31a forming the vehicle body side opening 31 is inclined downward, and the lower wall 32c of the tapered portion 32a is widened. Accordingly, the display portion 33 becomes larger and a user can easily recognize the display portion. The back wall 27b is inclined so that a lower side thereof is located on an inner side (the rear side) with respect to the vertical direction, and at this point as well, the lower wall 32c of the tapered portion 32a is widened and the display portion 33 becomes larger.

Note that the display portion 33 is not limited to marking or painting, and may be, for example, a light emitting portion that lights or blinks text or a mark. At this time, the lighting or blinking of the light emitting portion may be performed according to the opening and closing of the lid 28, the energization of the USB plug 51, or the operation of a separate switch. The lighting or blinking of the light emitting portion may be performed for a predetermined time only, and the presence or absence of light emission, the color, or the like may be changed according to the energization of the USB plug 51. The display portion 33 itself is not limited to emitting light, and may include a light emitting portion 33a (see Fig. 8) that illuminates the display portion 33. A sign may be mechanically or electrically displayed instead of the light emission.

Referring to Fig. 3, a cord hook 34 is provided in the inner box 26. A connection cord 51a connected to the USB plug 51 is hooked on the cord hook 34. The cord hook 34 is provided on, for example, one of left and right side walls of the inner box 26. By hooking and gathering the connection cord 51a on the cord hook 34, the connection cord 51a is less likely to be entangled in the inner box 26. By retracting the connection cord 51a from the bottom wall of the inner box 26, it is difficult for the storage article and the connection cord 51a to interfere with each other, and they can be easily put in and taken out. The means for holding the connection cord 51a is not limited to the cord hook 34, and may be a shelf or a pocket. The connection cord 51a is configured as a configuration on the external device side, which is to be attached to and detached from the USB port 52 inside the inner box 26, meanwhile, the connection cord 51a may be configured as a configuration on the vehicle side, and the USB plug 51 at a tip end of the cord may be pulled outside the inner box 26.

Referring to Fig. 3, for example, the leg shield 14 is provided with a cord guide portion 35 that guides the connection cord 51a extending from the USB plug 51 to bypass below the box opening 27a of the inner box 26. The cord guide portion 35 is, for example, a cord clip installed below the box opening 27a of the inner box 26. In the motorcycle 1, an external device may be mounted in the vicinity of the bar handle 2 for use. However, in a case in which the external device and the USB port 52 are connected by the connection cord 51a, the water moving along the connection cord 51a may reach inside the inner box 26. Since the connection cord 51a is guided to bypass below the box opening 27a by using the cord guide portion 35, the water moving along the connection cord 51a is guided below the box opening 27a of the inner box 26. Therefore, infiltration of water into the inner box 26 is suppressed. Note that the cord guide portion 35 may be installed above the box opening 27a of the inner box 26 as long as the cord guide portion guides the connection cord 51a below the box opening 27a of the inner box 26. The cord guide portion 35 is not limited to the cord clip (a locking portion), and may be a passage or groove for guiding a path of the connection cord 51a.

As described above, the USB port structure of a saddle-ride type vehicle according to the present embodiment includes the USB port 52 into and from which the USB plug 51 of the external device is inserted and detached in the predetermined insertion-detachment direction W1. The USB port 52 includes the port opening 53 through which the USB plug 51 is inserted and detached. The USB port 52 is disposed so that the port opening 53 faces downward in an on-vehicle state (so that the central axis L1 in the insertion-detachment direction W1 is inclined downward).

According to this configuration, as compared with the case in which the port opening 53 is disposed to face upward, it is difficult for water or dust to enter the port opening 53 even when it is exposed to water, and a waterproof property and a dustproof property of the USB port 52 can be enhanced. In addition, when the USB plug 51 is gripped from below and attached to and detached from the USB port 52, it is possible to make attachment and detachment of the USB plug 51 easier.

In the above-described USB port structure of a saddle-ride type vehicle, the USB port 52 is disposed to be inclined so that the end surface on the port opening 53 side is lower than the end surface on a side opposite to the port opening 53 in an on-vehicle state. The water blocking portion 60A that guides the water moving along the casing 55 to the outside of the port opening 53 is provided on the port opening 53 side of the casing 55 of the USB port 52.

According to this configuration, it is difficult for the water moving along the casing 55 of the inclined USB port 52 to enter the port opening 53, and a waterproof property of the USB port 52 can be enhanced.

In the above-described USB port structure of a saddle-ride type vehicle, the casing 55 includes the attachment flange 59 with respect to the vehicle body side. The water blocking portion 60A includes the upper flange 60 that is continuous with the attachment flange 59.

According to this configuration, the attachment flange 59 with respect to the vehicle body side and the upper flange 60 are consecutively integrally provided. Accordingly, the configuration is simplified, and the upper flange 60 reinforces the attachment flange 59, so that attachment strength and rigidity of the USB port 52 can be improved.

In the above-described USB port structure of a saddle-ride type vehicle, the casing 55 includes the hood 61 adjacent to a vehicle body side attachment component (the inner box 26) to which the USB port 52 is attached at least above the port opening 53 in an on-vehicle state.

According to this configuration, it is possible to prevent the port opening 53 from being exposed to the water moving along the vehicle body side attachment component, and to enhance a waterproof property of the USB port 52.

In the above-described USB port structure of a saddle-ride type vehicle, the hood 61 is provided to surround the outer periphery of the port opening 53.

According to this configuration, even when water splashes inside the vehicle body, it is possible to prevent the port opening 53 from being exposed to the water, and to enhance a waterproof property of the USB port 52.

In the above-described USB port structure of a saddle-ride type vehicle, the circuit board 62 is sealed with the potting resin 63 inside the casing 55. The potting surface 63a of the casing 55 where the potting resin 63 is exposed is disposed to face downward in an on-vehicle state.

According to this configuration, it is possible to prevent water from stagnating on the potting surface 63a and to enhance a waterproof property of the USB port 52.

Further, the USB port disposition structure of a saddle-ride type vehicle according to the present embodiment includes the USB port 52 into and from which the USB plug 51 of the external device is inserted and detached, and the vehicle body side attachment component (the inner box 26) to which the USB port 52 is attached. The vehicle body side attachment component is disposed on the back side of the wall portion (the back wall 27b) to shield the USB port 52. The wall portion has the vehicle body side opening 31 that exposes the port opening 53 of the USB port 52 on the front side of the wall portion, and the recess 32 obtained by recessing a periphery of the vehicle body side opening 31 from the front side of the wall portion.

According to this configuration, the recess 32 provided at a periphery of the vehicle body side opening 31 (the port opening 53) makes it possible to visually and tactually recognize the presence and position of the port opening 53. Therefore, it is possible to make insertion of the USB plug 51 easier.

In the above-described USB port disposition structure of a saddle-ride type vehicle, the USB port 52 allows the USB plug 51 to be inserted and detached into and from the USB port in the predetermined insertion-detachment direction W1. The recess 32 includes a tapered portion 32a formed to widen toward the detachment side in the insertion-detachment direction W1.

According to this configuration, when the USB plug 51 is inserted, if the USB plug 51 is brought close to the port opening 53, the tapered portion 32a guides the USB plug 51 toward the port opening 53. Therefore, it is possible to make insertion of the USB plug 51 easier.

In the above-described USB port disposition structure of a saddle-ride type vehicle, an upward portion (the lower wall 32c) formed upward in the tapered portion 32a is provided with a display portion 33 showing the presence of the USB port 52.

According to this configuration, when the user looks down on the wall portion, the presence and position of the USB port 52 can be seen due to the display portion 33 provided on the upward portion (the lower wall 32c). Therefore, it is possible to make insertion of the USB plug 51 easier.

In the above-described USB port disposition structure of a saddle-ride type vehicle, the USB port 52 is disposed so that the port opening 53 faces downward.

According to this configuration, as compared with the case in which the port opening 53 is disposed to face upward, it is difficult for water or dust to enter the port opening 53 even when it is exposed to water. Therefore, it is possible to enhance a waterproof property and a dustproof property of the USB port 52. In addition, when the USB plug 51 is gripped from below and attached to and detached from the USB port 52, it is possible to make attachment and detachment of the USB plug 51 easier.

The above-described USB port disposition structure of a saddle-ride type vehicle may include the inner box 26 that allows an article to be put in and taken out through the box opening 27a, the USB port 52 may be disposed such that the port opening 53 faces the inside of the inner box 26, and the port opening 53 may be disposed above the central portion 26a of the inner box 26 in the vertical direction.

According to this configuration, when the USB plug 51 is gripped from below and inserted into the USB port 52, it is easy for the hand to enter below the port opening 53 in the inner box 26, and it is possible to make insertion of the USB plug 51 easier.

In the above-described USB port disposition structure of a saddle-ride type vehicle, a cord hook 34 capable of holding the connection cord 51a extending from the port opening 53 may be provided inside the inner box 26.

According to this configuration, it is possible to gather the connection cord 51a connected to the USB port 52 or to store the connection cord 51a to be connected. Therefore, it is possible to prevent the connection cord 51a from being entangled in the inner box 26 or hindering storage of other articles, and to enhance usability of the inner box 26 and the USB port 52.

In the above-described USB port disposition structure of a saddle-ride type vehicle, the port opening 53 is disposed in a back wall 27b opposite to the box opening 27a in the inner box 26.

According to this configuration, it is possible to easily secure capacity on the inner side of the inner box 26 (the box opening 27a side), and to enhance usability of the inner box 26.

The above-described USB port disposition structure of a saddle-ride type vehicle may include the display portion 33 showing the presence of the USB port 52, and the display portion 33 may change a display according to insertion-detachment of the USB plug 51 with respect to the USB port 52.

According to this configuration, insertion status of the USB plug 51 can be seen by the change of the display such as the sign, the color, or the like, and convenience of the USB port 52 can be improved.

The above-described USB port disposition structure of a saddle-ride type vehicle may include the light emitting portion 33a that illuminates the port opening 53.

According to this configuration, the presence and position of the USB port 52 can be reliably recognized by visual observation, and thus it is possible to make insertion of the USB plug 51 easier.

Note that the present invention is not limited to the above-described embodiments. For example, the saddle-ride type vehicle may be any vehicle in which a driver straddles the vehicle body, including a motorcycle (including a motorized bicycle or a scooter type vehicle) as well as a three-wheeled vehicle (including a vehicle having one front wheel and two rear wheels as well as a vehicle having two front wheels and one rear wheel) or a four-wheeled vehicle.

In the present embodiment, an example in which a USB port having a power supply function and a communication function is installed in a saddle-ride type vehicle has been described, but the present invention is not limited thereto and may be applied to a case in which a USB port having a power supply function or a communication function is installed in a saddle-ride type vehicle. That is, a USB port is a terminal unit into and from which both a connection terminal having a power supply function and a communication function in the external device and a connection terminal having a power supply function or a communication function in the external device can be inserted and detached.

### BRIEF DESCRIPTION OF THE REFERENCE SYMBOLS

1: Motorcycle (saddle-ride type vehicle)
26: Inner box (vehicle body side attachment component, article storage box)
26a: Central portion in vertical direction
27a: Box opening
27b: Back wall (shielding portion)
31: Vehicle body side opening
32: Recess
32a: Tapered portion
32c: Lower wall (upward portion)
33: Display portion
33a: Light emitting portion
34: Cord hook (cord holder)
50: USB connector
51: USB plug (connection terminal)
51a: Connection cord
52: USB port (USB terminal unit)
53: Port opening (terminal connection port)
55: Casing
59: Attachment flange (attachment portion)
60A: Water blocking portion
60: Upper flange (water blocking wall)
61: Hood
62: Circuit board
63: Potting resin
63a: Potting surface
W1: insertion-detachment direction

## Claims

1. A USB terminal unit disposition structure for a saddle-ride type vehicle, comprising:
a USB terminal unit (52) which has at least one of a power supply function and a communication function and into and from which a connection terminal (51) of an external device is inserted and detached; and
a vehicle body side attachment component (26) to which the USB terminal unit (52) is attached,
wherein the vehicle body side attachment part (26) is disposed on a back side of a shielding portion (27b) to shield the USB terminal unit (52),
wherein the shielding portion (27b) comprises a vehicle body side opening (31) that exposes a terminal connection port (53) of the USB terminal unit (52) on a front side of the shielding portion (27b), and a recess (32) obtained by recessing a periphery of the vehicle body side opening (31) from the front side of the shielding portion (27b),
wherein the USB terminal unit (52) inserts and detaches the connection terminal (51) in a predetermined insertion-detachment direction (W1),
wherein the recess (32) comprises a tapered portion (32a) formed to be widened toward a detachment side in the insertion-detachment direction (W1), and
**characterized in that**
the USB terminal unit disposition structure further comprises:
an article storage box (26) that allows an article to be put in and taken out through a box opening (27a),
wherein the terminal connection port (53) is disposed in the shielding portion (27b) opposite to the box opening (27a) in the article storage box (26),
wherein an upward portion (32c) formed upward in the tapered portion (32a) is provided with a display portion (33) showing a presence of the USB terminal unit (52), and
wherein the USB terminal unit (52) is disposed such that the terminal connection port (53) faces downward.

2. The USB terminal unit disposition structure for a saddle-ride type vehicle according to claim 1,
wherein the USB terminal unit (52) is disposed such that the terminal connection port (53) faces an inside of the article storage box (26), and
wherein the terminal connection port (53) is disposed above a central portion (26a) of the article storage box (26) in a vertical direction.

3. The USB terminal unit disposition structure for a saddle-ride type vehicle according to claim 1 or 2,
wherein the USB terminal unit (52) is disposed such that the terminal connection port (53) faces an inside of the article storage box (26), and
wherein a cord holder (34) capable of holding a connection cord (51a) extending from the terminal connection port (53) is provided inside the article storage box (26).

4. The USB terminal unit disposition structure for a saddle-ride type vehicle according to any one of claims 1 to 3,
wherein the display portion (33) changes a display according to insertion-detachment of the connection terminal (51) with respect to the USB terminal unit (52).

5. The USB terminal unit disposition structure for a saddle-ride type vehicle according to any one of claims 1 to 4, further comprising a light emitting portion (33a) that illuminates the terminal connection port (53).

## Patentansprüche

1. USB-Anschlusseinheit-Anordnungsaufbau für ein Fahrzeug des Sattelsitztyps, der aufweist:
eine USB-Anschlusseinheit (52), die wenigstens eine von einer Stromversorgungsfunktion und einer Kommunikationsfunktion hat und in die ein Verbindungsanschluss (51) einer externen Vorrichtung eingesetzt und daraus gelöst wird; und
eine Anbringungskomponente (26) an der Fahrzeugkarosserieseite, an der die USB-Anschlusseinheit (52) angebracht ist,
wobei die Anbringungskomponente (26) an der Fahrzeugkarosserieseite an einer Rückseite eines Abschirmungsbereichs (27b) angeordnet ist, um die USB-Anschlusseinheit (52) abzuschirmen,
wobei der Abschirmungsbereich (27b) eine Öffnung (31) an der Fahrzeugkarosserieseite aufweist, die eine Anschlussverbindungsöffnung (53) der USB-Anschlusseinheit (52) an einer Vorderseite des Abschirmungsbereichs (27b) freilegt, und eine Aussparung (32), die durch Aussparung eines Umfangs der Öffnung (31) an der Fahrzeugkarosserieseite von der Vorderseite des Abschirmungsbereichs (27b) erhalten wird,
wobei die USB-Anschlusseinheit (52) den Verbindungsanschluss (51) in einer vorbestimmten Einsetz-Löse-Richtung (W1) einsetzt und löst,
wobei die Aussparung (32) einen verjüngten Bereich (32a) aufweist, der ausgebildet ist, um in Richtung einer Lösungsseite in der Einsetz-Löse-Richtung (1) verbreitert zu sein,
und **dadurch gekennzeichnet ist, dass**
der USB-Anschlusseinheit-Anordnungsaufbau weiterhin aufweist:
einen Aufbewahrungskasten (26) für Gegenstände, der ermöglicht, dass ein Gegenstand durch eine Kastenöffnung (27a) hineingelegt und herausgenommen wird,
wobei die Anschlussverbindungsöffnung (53) im Abschirmungsbereich (27b) gegenüber der Kastenöffnung (27a) in dem Aufbewahrungskasten (26) für Gegenstände angeordnet ist,
wobei ein oberer Bereich (32c), der im verjüngten Bereich (32a) nach oben ausgebildet ist, mit einem Anzeigebereich (33) vorgesehen ist, der ein Vorhandensein der USB-Anschlusseinheit (52) anzeigt, und
wobei die USB-Anschlusseinheit (52) so angeordnet ist, dass die Anschlussverbindungsöffnung (53) nach unten zeigt.

2. USB-Anschlusseinheit-Anordnungsaufbau für ein Fahrzeug des Sattelsitztyps nach Anspruch 1,
wobei die USB-Anschlusseinheit (52) so angeordnet ist, dass die Anschlussverbindungsöffnung (53) einer Innenseite des Aufbewahrungskastens (26) für Gegenstände zugewandt ist, und
wobei die Anschlussverbindungsöffnung (53) über einem Mittenbereich (26a) des Aufbewahrungskastens (26) für Gegenstände in einer vertikalen Richtung angeordnet ist.

3. USB-Anschlusseinheit-Anordnungsaufbau für ein Fahrzeug des Sattelsitztyps nach Anspruch 1 oder 2,
wobei die USB-Anschlusseinheit (52) so angeordnet ist, dass die Anschlussverbindungsöffnung (53) einer Innenseite des Aufbewahrungskastens (26) für Gegenstände zugewandt ist, und
wobei eine Kabelhalterung (34), die dazu ausgelegt ist, ein Verbindungskabel (51a), das von der Anschlussverbindungsöffnung (53) aus verläuft, zu halten, in dem Aufbewahrungskasten (26) für Gegenstände vorgesehen ist.

4. USB-Anschlusseinheit-Anordnungsaufbau für ein Fahrzeug des Sattelsitztyps nach einem der Ansprüche 1 bis 3,
wobei der Anzeigebereich (33) eine Anzeige gemäß dem Einsetzen-Lösen des Verbindungsanschlusses (51) bezüglich der USB-Anschlusseinheit (52) ändert.

5. USB-Anschlusseinheit-Anordnungsaufbau für ein Fahrzeug des Sattelsitztyps nach einem der Ansprüche 1 bis 4, der weiterhin einen lichtausstrahlenden Bereich (33a) aufweist, der die Anschlussverbindungsöffnung (53) beleuchtet.

## Revendications

1. Structure de disposition d'unité de borne USB pour un véhicule de type à selle, comprenant :
une unité de borne USB (52) présentant au moins l'une parmi une fonction d'alimentation électrique et une fonction de communication, une borne de connexion (51) d'un dispositif externe étant insérée dans celle-ci et retirée de celle-ci ; et
un composant de fixation côté carrosserie le véhicule (26) auquel l'unité de borne USB (52) est fixée,
dans laquelle la partie de fixation côté carrosserie de véhicule (26) est disposée sur un côté arrière d'une partie de protection (27b) pour protéger l'unité de borne USB (52),
dans laquelle la partie de protection (27b) comprend une ouverture côté carrosserie de véhicule (31) qui expose un port de connexion de borne (53) de l'unité de borne USB (52) sur un côté avant de la partie de protection (27b), et un évidement (32) obtenu par renfoncement d'une périphérie de l'ouverture côté carrosserie de véhicule (31) à partir du côté avant de la partie de protection (27b),
dans laquelle l'unité de borne USB (52) insère et retire la borne de connexion (51) dans une direction d'insertion-retrait (W1) prédéterminée,
dans laquelle l'évidement (32) comprend une partie effilée (32a) formée pour être élargie vers un côté de retrait dans la direction d'insertion-retrait (W1), et
**caractérisée en ce que**
la structure de disposition d'unité de borne USB comprend en outre :
un boîtier de rangement d'article (26) permettant d'y mettre et d'en sortir un article à travers une ouverture de boîtier (27a),
dans laquelle la partie de connexion de borne (53) est disposée dans la partie de protection (27b) à l'opposé de l'ouverture de boîtier (27a) dans le boîtier de rangement d'article (26),
dans laquelle une partie vers le haut (32c) formée vers le haut dans la partie effilée (32a) est dotée d'une partie d'affichage (33) représentant une présence de l'unité de borne USB (52), et
dans laquelle l'unité de borne USB (52) est disposée de sorte que le port de connexion de borne (53) soit face vers le bas.

2. Structure de disposition d'unité de borne USB pour un véhicule de type à selle selon la revendication 1,
dans laquelle l'unité de borne USB (52) est disposée de sorte que le port de connexion de borne (53) soit face vers un intérieur du boîtier de rangement d'article (26), et
dans laquelle le port de connexion de borne (53) est disposé au-dessus d'une partie centrale (26a) du boîtier de rangement vertical (26) dans une direction verticale.

3. Structure de disposition d'unité de borne USB pour un véhicule de type à selle selon la revendication 1 ou 2,
dans laquelle l'unité de borne USB (52) est disposée de sorte que le port de connexion de borne (53) soit face vers un intérieur du boîtier de rangement d'article (26), et
dans laquelle un porte-cordon (34) capable de contenir un cordon de connexion (51a) s'étendant depuis le port de connexion de borne (53) est prévu à l'intérieur du boîtier de rangement d'article (26).

4. Structure de disposition d'unité de borne USB pour un véhicule de type à selle selon l'une quelconque des revendications 1 à 3,
dans laquelle la partie d'affichage (33) change un affichage en fonction d'une insertion ou d'un retrait de la borne de connexion (51) par rapport à l'unité de borne USB (52).

5. Structure de disposition d'unité de borne USB pour un véhicule de type à selle selon l'une quelconque des revendications 1 à 4, comprenant en outre une partie d'émission de lumière (33a) qui éclaire la partie de connexion de borne (53).
